# EUROPÄISCHE PATENTSCHRIFT

(11) **EP 3 645 913 B1**
(45) Veröffentlichungstag und Bekanntmachung des Hinweises auf die Patenterteilung: **23.08.2023**
(21) Anmeldenummer: 18739768.2
(22) Anmeldetag: 28.06.2018
(51) Int. Cl.: F16G 13/16, H02G 11/00

(54) **ANORDNUNG MIT ZWEI ENERGIEFÜHRUNGSKETTEN UND VERSTELLBAREM FESTPUNKT**
ARRANGEMENT WITH TWO ENERGY GUIDE CHAINS AND ADJUSTABLE FIXED POINT
SYSTÈME MUNI DE DEUX CHAÎNES PORTE-CÂBLES ET D'UN POINT DE FIXATION DÉPLAÇABLE

(30) Priorität: 28.06.2017 DE 202017103858 U
(43) Veröffentlichungstag der Anmeldung: 06.05.2020
(73) Patentinhaber: Igus GmbH, 51147 Köln (DE)
(72) Erfinder: SCHLÖGEL, Frank, 50859 Köln (DE); SCHNEEBECK, Tim, 47058 Duisburg (DE)
(74) Vertreter: Lippert Stachow Patentanwälte Rechtsanwälte
(86) Internationale Anmeldenummer: PCT/EP2018/067444
(87) Internationale Veröffentlichungsnummer: WO 2019/002481

(56) Entgegenhaltungen:
- DE-A1-102004 040 162
- DE-B- 1 239 539
- DE-U1-202012 001 228

## Beschreibung

Die Erfindung betrifft eine Anordnung mit einer Energieführungskette zur Versorgung vom einem beweglichen Verbraucher, insbesondere eines vertikal verfahrbaren Verbraucher, wie z.B. bei einem Kraftdrehkopf (Engl. top drive) zum Antrieb des Bohrstrangs einer Bohranlage, wie z.B. in EP 1 108 110 B1 gezeigt, oder in anderen Anwendungen mit langem Verfahrweg.

In herkömmlichen Anordnungen ist eine Energieführungskette, meist aus schwenkbar miteinander verbundenen Kettengliedern, die einen Aufnahmeraum definieren, vorgesehen zum geschützten Führen einer oder mehrerer Leitungen zwischen einem ersten Anschlusspunkt, typisch dem sog. Festpunkt, und einem dazu relativbeweglichen zweiten Anschlusspunkt, meist als Mitnehmer bezeichnet. Die Energieführungskette bildet dabei typisch einen zwischen zwei Trumen fahrbaren Umlenkbogen mit vorgegebenem Radius. Sie schützt so die Leitungen u.a. gegen Abknicken. Der Mitnehmer fährt zusammen mit dem Verbraucher zwischen einer ersten Endposition und einer zweiten Endposition entlang eines bestimmungsgemäßen Verfahrwegs des Verbrauchers. Dabei ist die Energieführungskette typisch mit ihrem ersten Ende am ersten Anschlusspunkt bzw. Festpunkt und mit dem zweiten Ende am zweiten Anschlusspunkt bzw. Mitnehmer befestigt.

Solche Anordnungen sind in vielen Anwendungsgebieten verbreitet, z.B. auch in Portalkränen, in Kränen mit Ausleger-Armen und anderen Maschinen mit relativ langem Verfahrweg.

Ein Führungssystem für ausfahrbare und einziehbare Auslegermaschinen wie Krane, Schwebeplattformen und ähnliches ist in der Patentschrift EP 0 308 758 A2 vorgeschlagen worden, um flexible Schläuche und Kabel zu unterstützen, die einen Verbraucher am äußersten Ende eines Auslegers versorgen. Eine Leitungsführungsanordnung speziell für Teleskopausleger ist auch aus dem Gebrauchsmuster DE 20 2014 105 136 U1 bekannt.

Auch in anderen, nicht teleskopierbaren Anwendungen kann es wünschenswert sein, das System zur Führung von Leitungen auf eine kompakte Länge einzufahren, beispielsweise um den Transport der Maschine oder ihrer einzelnen Bestandteile zu erleichtern. Weiterhin bekannt sind Führungen, insbesondere Führungsrinnen, für Energieführungsketten, welche den Verlauf der Energieführungskette vorgeben bzw. stabilisieren. Auch in diesem Zusammenhang sind bereits ein- und ausfahrbare Führungen bekannt. WO 2015/144727 A1 offenbart z.B. eine Führungsrinne, mit welcher die Energieführungskette auf eine im Vergleich zum Verfahrweg deutlich kürzere Baulänge eingefahren werden kann. Einen weiteren Ansatz beschreibt z.B. DE 102 52 702 A1, nämlich eine Energieführungskette mit einer Trageanordnung, an der die Führungskette gehalten und geführt wird, und die eine ortsfeste Grundtragestruktur mit einer daran verschiebbar gelagerten Teleskopschiene aufweist. Zum Ein- und Ausfahren gleitet ein Aufhängungsteil, an dem die Energieführungsketten gehalten ist, entlang der Teleskopschiene. Die beiden letztgenannten Lösungen sind jedoch nicht ohne Weiteres für vertikal verfahrbare Verbraucher, insbesondere mit langem Verfahrweg, geeignet. Des Weiteren ist eine gattungsgemäße Anordnung nach dem Oberbegriff des Anspruchs 1 aus der DE 10 2004 040162 A1 bekannt.

Eine erste Aufgabe der Erfindung besteht mithin darin, eine Anordnung mit einer Energieführungskette so weiterzubilden, dass die Anordnung kompakt eingefahren werden kann. Sie soll dabei in einem eingefahrenen Zustand - im Vergleich zur halben Länge des bestimmungsgemäßen Verfahrwegs - auf eine spürbar geringere Gesamtlänge eingefahren werden können und sich besonders für vertikale Anwendungen gut eignen.

Gemäß einem ersten Aspekt der Erfindung wird die eingangs genannte Aufgabe bereits dadurch gelöst, dass zunächst der erste Anschlusspunkt, welcher bei herkömmlichen Energieführungsketten den sog. Festpunkt bildet, an einem verfahrbaren Schlitten vorgesehen wird, und an diesem Schlitten auch ein dritter Anschlusspunkt vorgesehen ist. Der Schlitten ist dabei zwischen einer Betriebsstellung, die im mittleren Bereich zwischen der ersten und der zweiten Endposition liegt, und einer Parkstellung zwischen der Betriebsstellung und der zweiten Endposition, verfahrbar, insbesondere parallel zum Verfahrweg und unabhängig vom Verbraucher. Ferner wird erfindungsgemäß eine zusätzliche Hilfs-Energieführungskette zum geschützten Führen der mindestens einen Leitung zwischen dem zusätzlichen dritten Anschlusspunkt am verfahrbaren Schlitten und einem stationären vierten Anschlusspunkt vorgesehen. Die Hilfs-Energieführungskette kann insbesondere mit einem Ende am dritten Anschlusspunkt und mit ihrem anderen Ende am vierten Anschlusspunkt befestigt werden.

Bei dieser Anordnung bildet die an sich bekannte Energieführungskette eine Art "Haupt-Energieführungskette", die bestimmungsgemäß für den verfahrbaren Betrieb des Verbrauchers vorgesehen ist und in welcher die Leitung(en) geführt ist/sind. Die zusätzliche Hilfs-Energieführungskette dient dabei primär zum Einfahren des im Betrieb festgelegten ersten Anschlusspunkts der Haupt-Energieführungskette in eine eingezogene Parkstellung, die von der Betriebsstellung des ersten Anschlusspunkt entfernt liegt. Dank des Schlittens mit der zusätzlichen bzw. separaten Hilfs-Energieführungskette kann auch die Haupt-Energieführungskette selbst in eine eingezogene Parkstellung eingezogen werden. Hierbei kann der vierte stationäre Anschlusspunkt die Funktion eines eigentlichen ortsfesten Festpunkts wahrnehmen, und der am Schlitten vorgesehene zweite Anschlusspunkt dient sozusagen als variabler Festpunkt, der im nominalen Betrieb raumfest sein kann, bei Bedarf jedoch in eine kompaktere Parkstellung eingefahren bzw. verstellt werden kann.

Je nach Anwendung und Längenverhältnis der beiden Ketten kann so eine im Vergleich zur typisch erforderlichen halben Länge des gewünschten Verfahrwegs deutlich kürzere, kompaktere eingefahrene Baulänge erzielt werden. Im Vergleich zu bekannten Gestaltungen, z.B. für Teleskopausleger ist die vorgeschlagene Lösung im Aufbau deutlich einfacher und damit kostengünstiger. Es wird vorzugsweise lediglich bzw. genau ein Schlitten und lediglich bzw. genau eine Hilfs-Energieführungskette vorgesehen.

Ja nach Platzverhältnissen ist die Hilfs-Energieführungskette vorzugsweise an der gegenüberliegenden Seite des Schlittens angeordnet. Beide Ketten können alternativ auch an derselben Seite nebeneinander verlaufen.

In einer günstigen Weiterbildung ist die Baulänge der Hilfs-Energieführungskette um mindestens ein Viertel, insbesondere um etwa die Hälfte, kürzer als die Baulänge der Haupt-Energieführungskette. Die Baulänge der Hilfs-Energieführungskette kann vorzugsweise im Bereich von mindestens 25%, insbesondere ca. 30% bis max. 75%, insbesondere bis ca. 50% der Baulänge der Haupt-Energieführungskette betragen.

Theoretisch ist auch eine Ausführungsform mit etwa gleichen Längen beider Energieführungsketten denkbar, insbesondere, wenn der Schlitten zur Erhöhung der Gesamtreichweite aus der Parkstellung heraus in zwei oder mehr verschiedene Betriebsstellungen gebracht werden kann, d.h. der variable Festpunkt soz. in mehreren Schritten einstellbar ist. Bei einer besonders einfachen Ausführungsform mit lediglich einer Betriebsstellung des beweglichen Schlittens wird die Hilfs-Energieführungskette jedoch typischerweise etwa die Hälfte der Länge der Haupt-Energieführungskette aufweisen, gegebenenfalls abzüglich einer Länge am Schlitten, über welche die Leitungen vom Schlitten selbst geführt werden können.

Der Schlitten hat vorzugsweise eine Baulänge in Verfahrrichtung von etwa oder mindestens der halben Länge der Hilfs-Energieführungskette. An einem relativ lang gestreckten Schlitten können die Energieführungsketten beidseitig abgestützt werden. Außerdem können bedarfsweise die Leitungen über einen Längsabschnitt am Schlitten geschützt geführt werden, um z.B. die Baulänge der Hilfs-Energieführungskette zu verringern. Die Breite des Schlittens quer zur Verfahrrichtung entspricht vorzugsweise in etwa dem doppelten Radius der Umlenkbögen der Energieführungskette. Die Ketten haben vorzugsweise identischen Radius im Umlenkbogen und/oder gleichsinnig gerichtete Umlenkbögen.

Gemäß der Erfindung ist dem Schlitten eine eigene Längsführung im Wesentlichen parallel zum Verfahrweg der Haupt-Energieführungskette zugeordnet. Diese kann sich, insbesondere entsprechend der Länge der Hilfs-Energieführungskette, über etwa ein Viertel bis etwa ein Drittel der Strecke vom mittleren Bereich, d.h. dem Bereich mit der nominalen Betriebsstellung zwischen der ersten und der zweiten Endposition, hin zur zweiten Endposition erstrecken.

In Kombination umfasst der Schlitten eine Arretiervorrichtung, mit welcher dieser in der bzw. jeder Betriebsstellung und vorzugsweise auch in der Parkstellung festgelegt wird. Der Schlitten kann insbesondere an der mit dem Schlitten zusammenwirkenden Längsführung arretiert bzw. festgelegt werden. Die Hilfs-Energieführungskette soll im eigentlichen Betrieb bestimmungsgemäß nicht mit der Haupt-Energieführungskette mitfahren, weil Letztere einen Festpunkt in der üblichen Art aufweisen soll. Somit kann der am verfahrbaren Schlitten vorgesehene erste Anschlusspunkt der Haupt-Energieführungskette durch die Arretierung im Betrieb einfach ortsfest gemacht bzw. festgelegt werden. Dies kann manuell oder automatisch erfolgen. Jede geeignete Arretierungsvorrichtung kommt dabei in Betracht, beispielsweise ein einfacher Querriegel bzw. Verriegelungsbolzen, der gegen Längsverschiebung sichert.

Die Längsführung des Schlittens kann als Linearführung, z.B. als Führungsschiene, Gleitlager mit Profilschiene oder dergleichen, mittig zwischen zwei Führungsrinnen angeordnet sein, die zur verbesserten Führung sowohl der Haupt-Energieführungskette einerseits und der Hilfs-Energieführungskette andererseits vorgesehen sind. Geeignete Führungsrinnen sind an sich bekannt. Die Arretierungsvorrichtung kann ggf. mit der Längsführung zusammenwirken.

Zur Gewichtseinsparung, insbesondere bei sehr langen Verfahrwegen, sind die beiden Energieführungsketten vorzugsweise aus Kunstsoff-Gliedern und die Führungsrinnen vorzugsweise aus Leichtmetall, insbesondere Aluminium, hergestellt. Für hohe Zugkraft-Anforderungen, insbesondere bei hohem Leitungsgewicht in vertikaler Anwendung, ist es zweckmäßig, wenn die Energieführungsketten aus faserverstärktem Kunststoff, z.B. im Spritzgussverfahren, hergestellt sind.

Eine gute Entlastung und hohe Lebensdauer der Leitungen bezüglich Zugkräften wird erreicht, wenn der Schlitten jeweils zu jedem seiner Anschlusspunkte mindestens eine entsprechende Zugentlastung aufweist, um die geführte(n) Leitung(en) am Schlitten gegen Zugkraft zu entlasten. Dabei können die Haupt- und die Hilfs-Energieführungskette jeweils Endbefestigungsglieder aufweisen, die den ersten bzw. den dritten Anschlusspunkt am Schlitten bilden. Solche Endbefestigungsglieder können vorzugsweise mehrere getrennte Zugentlastungen für die aufgenommenen Leitungen umfassen. Geeignete Befestigungsglieder verringern den Herstellungsaufwand für den Schlitten an sich.

In einer Anwendung, die beispielsweise für einen Bohrturm besonders geeignet ist, können mindestens drei in Längsrichtung verbindbare separate Ausleger- oder Mast-Längssegmente oder dgl. (nachfolgend kurz Segmente) vorgesehen sein, die z.B. die Teilabschnitte eines Bohrturms bilden. Dabei können die beiden Endpositionen für den eigentlichen Betrieb der Haupt-Energieführungskette jeweils im Endbereich an einem von zwei äußeren Segmenten liegen. In dieser Anwendung kann die Parkstellung an oder in nur einem Segment, nämlich dem äußeren Segment mit der zweiten Endposition liegen, an welchem auch der vierte Anschlusspunkt ortsfest vorgesehen wird. Somit lässt sich die Anordnung zur Leitungsführung vollständig auf die Länge von nur einem Segment, nämlich des äußeren Segments mit der Parkstellung einfahren.

In vorteilhafter Weiterbildung ist die Anordnung zur Leitungsführung vorzugsweise vollständig in einem Innenraum innerhalb der Segmente aufgenommen. So lässt sich eine besonders kompakt transportierbare und sowohl im Betrieb, als auch beim Transport geschützte Gestaltung erzielen.

Der Schlitten kann so nach dem Aufbau, bzw. beim eigentlichen Betrieb der Haupt-Energieführungskette in eine Betriebsstellung, in ein anderes Segment als dasjenige mit der Parkstellung ausgefahren werden, z.B. in einem mittleren von drei verbundenen Segmenten, und dort arretiert werden.

Zum Ausfahren und gegebenenfalls auch Einfahren hat die Anordnung bevorzugt einen Antrieb, und insbesondere für vertikale Bewegung ein Hebezeug, insbesondere eine Winde, zum Heben des Schlittens mitsamt den daran befestigten Energieführungsketten von der Parkstellung in die Betriebsstellung und zurück. Vorteilhaft ist dabei an einem der Parkstellung abgewandten ersten Endbereich des Schlittens ein sattelartiger Umlenkbereich mit mindestens einer Hebeöse vorgesehen. Die Hebeöse erlaubt das bedarfsweise Verbinden mit dem Hebezeug, z.B. einem Kranhaken einer Seilwinde.

Ein sattelartiger Umlenkbereich kann zur geschützten Umlenkung der geführten Leitungen zwischen den beiden Anschlusspunkten am Schlitten vorgesehen sein.

Eine hinsichtlich der Leitungsführung günstige Gestaltung sieht vor, dass am ersten Endbereich des Schlittens, insbesondere dem der Parkstellung abgewandten Endbereich, der erste Anschlusspunkt und der dritte Anschlusspunkt im Wesentlichen gegenüberliegend vorgesehen sind. Der Schlitten kann dazwischen einen Umlenkbereich für die geführte(n) Leitung(en) haben. Durch eine etwa gleiche Leitungslänge beidseitig des Umlenkbereichs am Schlitten, wird die Gewichtsverteilung am Schlitten optimiert, z.B. bzgl. Kippmomenten an der Längsführung.

Um eine zusätzliche Führung der Energieführungskette innerhalb der Anordnung zu erzielen, ist es vorteilhaft, wenn der Schlitten eine Längserstreckung über mindestens 50%, vorzugsweise mindestens 75% der Baulänge der Hilfs-Energieführungskette hat. Bei entsprechender Baulänge des Schlittens können entsprechend lange Profilbleche oder Leitbleche ähnlich einer Führungsrinne am Schlitten selbst vorgesehen sein. Diese können z.B. unerwünschte seitliche Schwenkbewegung der Energieführungskette beim vertikalen Verfahren auffangen.

Dementsprechend sieht eine Weiterbildung vor, dass der Schlitten beidseitig jeweils ein Profilblech in Art einer Leitplatte zum Leiten der Haupt- bzw. der Hilfsenergieführungskette aufweist, wobei die Profilbleche insbesondere Teile einer Führungsrinne bilden können und einen überwiegenden Anteil der Längserstreckung des Schlittens darstellen.

Zur Gewichtsreduzierung des verfahrbaren Schlittens an sich, können dabei die Profilbleche vorzugsweise durch ein Fachwerk, aus bspw. diagonalen Metallstreben, parallel zueinander gehalten und zu einem stabilen Gestell verbunden sein.

Die vorgeschlagene Anordnung ist besonders geeignet zur dynamischen Führung von mehreren Leitungen zwischen relativ beweglichen Anschlusspunkten, insbesondere für ein Leitungspaket, das mindestens ein Stromversorgungskabel und eine Steuer- bzw. Datenleitung umfasst. Die Leitungen sind dabei vom vierten Anschlusspunkt durch die Hilfs-Energieführungskette, über den Schlitten und weiter durch die Haupt-Energieführungskette bis zum Mitnehmer bzw. zweiten Anschlusspunkt unterbrechungsfrei durchgehend und durch die Energieführungsketten geschützt geführt. Neben elektrischen Kabeln kommen auch faseroptische Leitungen oder Schläuche wie z.B. für hydraulische oder pneumatische Abnehmer in Betracht.

Die vorgeschlagene Anordnung eignet sich besonders zur Verwendung in einem Bohrturm, insbesondere Tiefbohrturm, der aus mehreren Segmenten aufgebaut ist und in Einzelteilen transportiert werden kann. In einem solchen Fall können die Haupt-Energieführungskette, der Schlitten und die Hilfs-Energieführungskette in eine Parkstellung innerhalb eines unteren Segments eingefahren werden. Dieses Segment hat vorzugsweise eine geringfügig größere Baulänge, als die anderen Segmente, um eine vollständige Aufnahme der vorgenannten Bestandteile der Anordnung zur Leitungsführung zu erleichtern.

Die Anordnung kann insbesondere, aber nicht ausschließlich, z.B. zur Leistungsversorgung des Kraftdrehkopfes in einem Bohrturm mit Strom, und ggf. auch zum Datenaustausch mit Steuer- und Messsignalen, genutzt werden. Besondere Vorteile zeigt die Verwendung in Bohrtürmen, bei welchen der Kraftdrehkopf über einen Vertikalhub von mindestens 30m verfahrbar ist, d.h. die Segmente jeweils eine Baulänge von über 10m haben. Hier lassen sich längenbezogene Reduzierungen von über 5m reduzieren, was den Transport z.B. in einem 40ft. ISO-Container erst erlaubt.

Mit einer konventionellen Anordnung einer Energieführungskette müssten zwei solcher Segmente beachtlicher Länge gemeinsam transportiert werden, wenn die Anordnung zur Leitungsführung nicht separat für jede Demontage des Obertrums abgebaut und nach Aufbau wieder angebaut werden soll, oder man müsste nur zwei entsprechend um 50% längere Segmente einsetzen. Zu beachten ist auch der resultierende Vorteil in Bezug auf die geschützte Führung der Leitungen beim Transport der demontierten Segmente des Bohrturms, d.h. wenn die Anordnung zur Leitungsführung in die eingefahrene Parkstellung gebracht ist und dort gegebenenfalls gesichert festgelegt wurde. Dies ist insbesondere bei empfindlichen Leitungen ein beachtlicher Vorteil, eine Demontage der Energieführungsketten-Anordnung ist nicht nötig.

Weitere Einzelheiten, Merkmale und Vorteile der Erfindung ergeben sich aus der nachfolgenden, ausführlichen Beschreibung eines bevorzugten Ausführungsbeispiels anhand der beiliegenden Abbildungen. Diese zeigen in schematischer Darstellung:
**FIG.1****:** eine Seitenansicht eines mehrgliedrigen Bohrturms, der aus drei Mastsegmenten zusammengesetzt ist;
**FIG.2A-2B****:** schematische Längsschnitte gemäß Schnittlinien E-E bzw. D-D gemäß FIG.1 mit einer Haupt-Energieführungskette im Betrieb, in einer ersten Endposition (FIG.2A: oben) und in einer zweiten Endposition (FIG.2B: unten), wobei nur die wesentlichen Bauteile dargestellt sind;
**FIG.3****:** einen Längsschnitt entsprechend FIG.2B, mit der Haupt-Energieführungskette und einer Hilfs-Energieführungskette in einer gegenüber FIG.2A-2B eingezogenen Parkstellung;
**FIG.4****:** eine perspektive Ansicht entsprechend FIG.2A;
**FIG.5A-5B****:** perspektivische Teilausschnitte aus FIG.2A, die einen verfahrbaren Schlitten näher zeigen, in einem ersten Endbereich (FIG.5A: oberes Ende) und in einem zweiten Endbereich (FIG.5B: unteres Ende);
**FIG.6A-6B****:** Querschnitte durch die Anordnung in den Teilausschnitten nach FIG.5A-5B; und
**FIG.7A-7B****:** in perspektivischer Teildarstellung eine Arretierungsvorrichtung zum festlegen des Schlittens an seiner Längsführung.

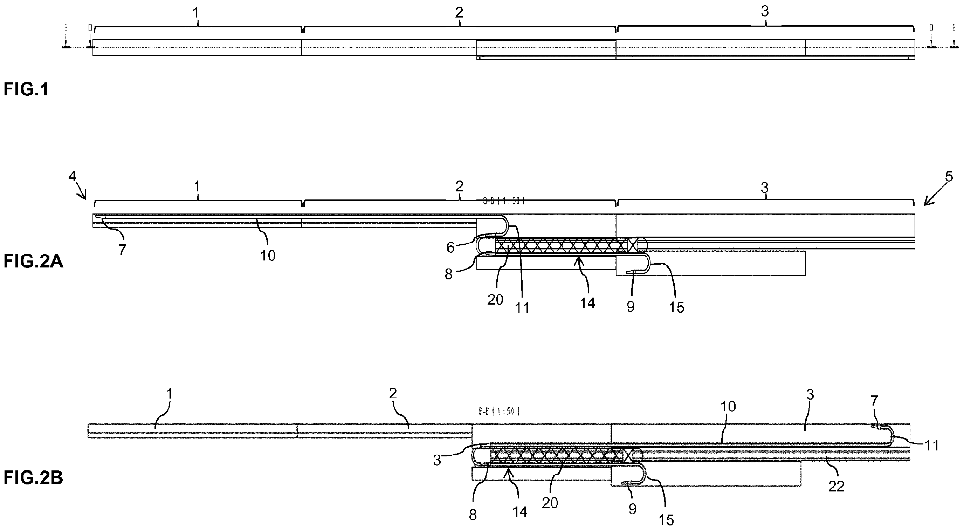

FIG.1 zeigt schematisch als Anwendungsbeispiel einen vertikal aufzustellenden Bohrturm aus drei separat transportierbaren Längssegmenten 1, 2, 3 die in Längsrichtung stabil zusammengesetzt sind. Das unterste Segment 3 hat eine etwas größere Baulänge, als das mittleres Segment 2, und dass oberste Segment 1 kann kürzer oder gleichlang sein, wie das Segment 2. Die Segmente 1, 2, 3 bilden im Inneren einen Hohlraum und sind beispielsweise in Art eines Tragwerks ausgeführt. Typische an sich bekannte Einzelheiten der Segmente 1, 2, 3 sind zur Vereinfachung nicht dargestellt, insbesondere ist ein vom oberen Endpunkt 4 bis zum unteren Endpunkt 5 verfahrbarer Verbraucher, wie z.B. der Antrieb für ein Bohrgerät, insbesondere ein Kraftdrehkopf nicht näher gezeigt.

Zur Versorgung des Verbrauchers (nicht gezeigt) ist eine Haupt-Energieführungskette 10 vorgesehen, und mit einem ersten Endbefestigungsglied an einem ersten Anschlusspunkt 6 befestigt, der im Betrieb bezüglich der mit Segmente 1, 2, 3 unbeweglich festgelegt ist. Das andere Endbefestigungsglied der Haupt-Energieführungskette 10 ist am verbraucherseitigen ersten Anschlusspunkt 7 bzw. Mitnehmer befestigt, welcher mit dem Verbraucher mitfährt. Die Haupt-Energieführungskette 10 bildet zwischen zwei Trumen mit variabler Länge einen Umlenkbogen 11 mit vorbestimmten Radius um die geführten Leitungen (nicht gezeigt) zu stützen, welche geschützt innerhalb der Haupt-Energieführungskette 10 verlaufen.

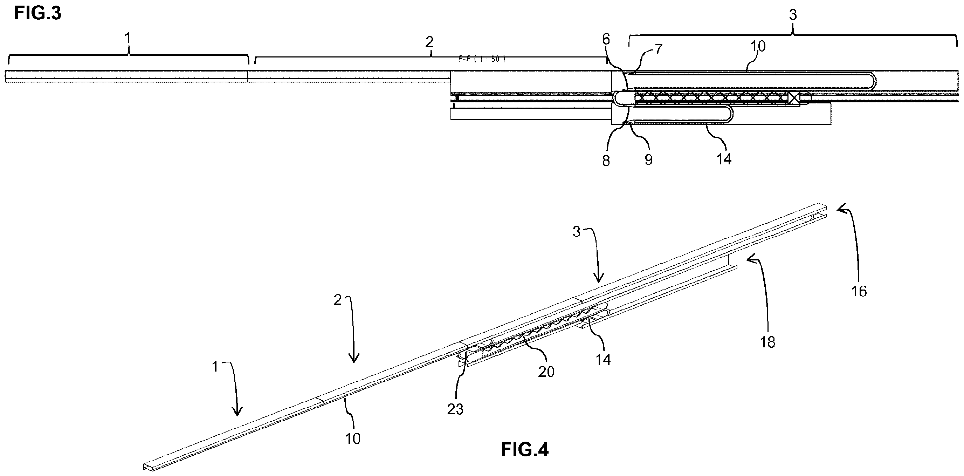

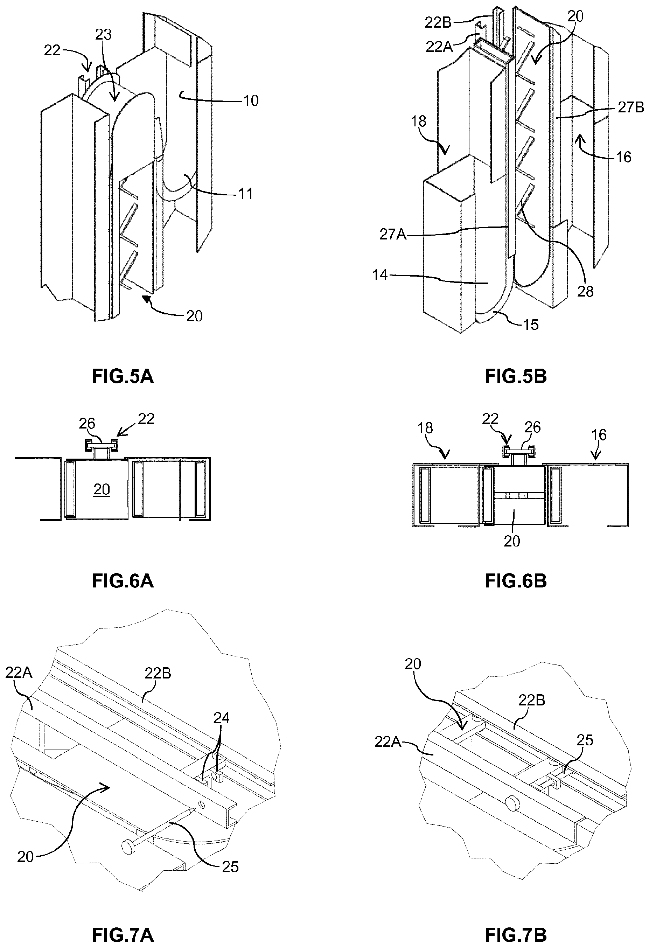

Der erste Anschlusspunkt 6 wird dabei durch einen beweglichen Schlitten 20 gebildet, welcher innerhalb der Segmente 2,3 an einer Längsführung 22 (FIG.5A-6B) parallel zur Verfahrrichtung und unabhängig vom bestimmungsgemäßen Verfahren des Verbrauchers verschiebbar gelagert ist. Dadurch ist die Lage des zweiten Anschlusspunkts 7, welcher im Betrieb den Festpunkt für die Haupt-Energieführungskette 10 darstellt, ebenfalls verschiebbar, da dieser ortsfest am Schlitten 20 angeordnet ist. Dabei ist der Schlitten 20 zwischen einer Betriebsstellung, die wie in FIG.2A-2B gezeigt, im mittleren Bereich zwischen der ersten Endposition (FIG.2A) und der zweiten Endposition (FIG.2B) des Mitnehmers 7 liegt, und einer Parkstellung, die in FIG.3 veranschaulicht ist, verfahrbar. Die Parkstellung gemäß FIG.3 liegt vollständig innerhalb des untersten Segments 3 und somit zwischen der Betriebsstellung des Schlittens 20 in FIG.2A/2B und der zweiten Endposition des Mitnehmers 7. An allen Anschlusspunkten 6, 7, 8 und 9 sind beispielsweise durch die Endbefestigungsglieder der Energieführungsketten 10, 14 bereitgestellte Zugentlastungen (nicht gezeigt) mit an sich bekannter Bauweise für die Leitungen vorgesehen.

Der verfahrbare Schlitten 20, hat gegenüberliegend dem ersten Anschlusspunkt 6 einen dritten Anschlusspunkt 8, von welchem aus die geführten Leitungen in einer weiteren separaten Hilfs-Energieführungskette 14, zu einem stationären vierten Anschlusspunkt 9 am untersten Segment 3 geführt sind. Die Hilfs-Energieführungskette 14 bildet ebenfalls einen Umlenkbogen 15 und kann baugleich zur Haupt-Energieführungskette 10 sein, sie hat jedoch eine deutlich geringere Gesamtlänge, z.B. etwa 50-60% der Baulänge des Segments 3, und weniger als 50 % der Länge der Haupt-Energieführungskette 10. So können sämtliche erforderlichen Leitungen von der Haupt-Energieführungskette 10, über einen zusätzlichen Umlenkbogen 23 (FIG.5A) am ersten Endbereich des Schlittens 20, anhand der Hilfs-Energieführungskette 14 gestützt und geschützt vom variablen ersten Anschlusspunkt 6 hin zum stationären vierten Anschlusspunkt 9 geführt werden, auch beim ein und ausfahren in Bezug auf die Parkstellung, innerhalb des unteren Segments 3, vgl. FIG.3. Im eigentlichen Betrieb der Haupt-Energieführungskette 10 verfährt die Hilfs-Energieführungskette 14 im gezeigten Beispiel nicht. Insbesondere bei mehr als vier Segmenten 1, 2, 3 ... ist jedoch auch eine stufenweise Einstellung des Schlittens 20 mit unterschiedlichen Betriebslagen für den ersten Anschlusspunkt 6 denkbar, ohne dass dabei eine längere Haupt-Energieführungskette 10 benötigt wird.

Wie FIG.3 besonders anschaulich zeigt lässt sich die gesamte Anordnung zur Leitungsführung auf die im Vergleich zur Gesamtlänge aller Segmente 1, 2, 3 auf die deutlich kürzere Länge des untersten Segments 3 einfahren, die nur 33-40% der Gesamtlänge bzw. des Verfahrwegs des Mitnehmers 7 beträgt. Zudem kann die gesamte Anordnung mit beiden Energieführungsketten 10, 14, den geführten Leitungen (nicht gezeigt) und dem beweglichen Schlitten 20 innerhalb des Hohlraums im Segment 3 geschützt mit diesem transportiert werden. Damit ist es auch nicht erforderlich, die Leitungsführungs-Anordnung, für den Transport der turmartigen Vorrichtung aus den Segmenten 1, 2, 3 zu demontieren und anschließend beim Aufbau wieder zu montieren, was beachtlich die Montagezeit reduziert und zudem Beschädigungen der Leitungen vermeidet.

Wie am besten aus FIG.7A-7B ersichtlich, sind am ersten und/oder zweiten Endbereich des Schlittens 20 Haltelaschen 24 vorgesehen. Durch fluchtende Bohrungen in gegenüberliegenden U-Profil-Schienen 22A, 22B der Längsführung 22 kann ein Arretierbolzen 25 in die Haltelaschen 24 eingeschoben werden, um den Schlitten 20 in vorbestimmten Lage der Betriebsstellung (FIG.2A/2B) und der Parkstellung gemäß FIG.3 gegen Längsverschiebung zu sichern. Wie aus FIG.6A-6B ersichtlich ist die Längsführung 22 etwa mittig und seitlich versetzt zwischen einer ersten Führungsrinne 16 für die Haupt-Energieführungskette 10 und einer kürzeren, zweiten Führungsrinne 18 für die Hilfs-Energieführungskette 14 vorgesehen und als Führungsschiene ausgeführt. Zumindest die Endbereiche des Schlittens 20 greifen mit Führungselementen 26 in die Profil-Schienen 22A, 22B der Längsführung 22 ein und sind darin in Art einer Gleitführung linear geführt.

Die beiden Energieführungsketten 10, 14 haben vorzugsweise eine identische und an sich bekannte Bauart aus einzelnen Kunststoff-Kettengliedern, z.B. vom Typ E4/00 oder E2/00 der Fa. igus GmbH, D-51147 Köln, bzw. gemäß WO 00/63586 A1 oder EP 0711388 B1, auf deren Inhalt zur Verkürzung betreffend die Bauweise der Kettenglieder Bezug genommen wird. Die Glieder der beiden Energieführungsketten 10, 14 sind bevorzugt aus Spritzgussteilen aus Kunststoff zusammengesetzt.

Die Führungsrinnen 16, 18 sind zur Gewichtsreduzierung vorzugsweise durch gegenüberliegende C- oder U-Profile aus Leichtmetall-Blech, insbesondere Aluminium, hergestellt. Dabei hat die längere Führungsrinne 16, an der vom Schlitten 20 abgewandten Seite vorzugsweise an jedem der Segmente 1, 2, 3 entsprechend fluchtende Profile, wie in FIG.4 gezeigt. An der gegenüberliegenden Seite ist jedenfalls im unteren Segment 3 ein entsprechendes Profil vorgesehen. Ferner weist der Schlitten 20 an dieser, der Haupt-Energieführungskette 10 zugewandten Längsseite ebenfalls ein entsprechendes Profil auf, um die beidseitig gestützte Länge in das mittlere Segment 2 hinein zu verlängern. Die kürzere Führungsrinne 18 für die Hilfs-Energieführungskette 14 hat entsprechend ein dem Schlitten 20 gegenüberliegendes Profil im unteren Segment 3 und ein am Schlitten 20, der Hilfs-Energieführungskette 14 zugewandtes entsprechendes Profil.

Der langgestreckte Schlitten 20 kann dabei im Wesentlichen durch die beiden voneinander abgewandten Profilbleche 27A, 27B der Führungsrinne 16 bzw. 18, und eine zwischenliegende Verstärkung in Form eines Fachwerks aus Metallstreben 28, was eine zugleich stabile und leichte Bauweise ermöglicht. Die Profilbleche 27A, 27B können mit dem Umlenkbogen 23 einteilig hergestellt sein. Der Umlenkbogen 23 hat einen Radius in etwa gleich den Umlenkbogen 11, 15. Zusätzlich zu den äußeren Profilen der Führungsrinne 16, 18 und den Profilblechen 27A, 27B können, wie FIG.5-6 zeigen, weitere Profilbleche an den Segmenten 2, 3 vorgesehen sein, gegenüber welchen die Profilbleche 27A, 27B des Schlittens 20 teleskopisch ein- und ausfahrbar sind.

Die gezeigte Anordnung mit einer Haupt- und einer Hilfs-Energieführungskette zur Realisierung eines variabel verstellbaren Festpunkts eignet sich besonders für turmartige Maschinen oder Anlagen mit großer Gesamtlänge, beispielsweise mindestens 30m, die in Einzelteilen transportiert werden sollen.

### Bezugszeichenliste

FIG.1-7:
1, 2, 3 Längs-Segmente
4, 5 Endpositionen
6 erster Anschlusspunkt (variabler Festpunkt)
7 zweiter Anschlusspunkt (Mitnehmer)
8 dritter Anschlusspunkt
9 vierte Anschlusspunkt (ortsfester Festpunkt)
10 Haupt-Energieführungskette
11 Umlenkbogen
14 Hilfs-Energieführungskette
15 Umlenkbogen
16 lange Führungsrinne (der Haupt-Energieführungskette)
18 kurze Führungsrinne(der Hilfs-Energieführungskette)
20 Schlitten
22 Längsführung
22A, 22B Profilschienen
23 Umlenkbogen
24 Arretier-Laschen
25 Arretierbolzen
26 Führungselement
27A, 27B Profilbleche
28 Fachwerk-Querstreben

## Patentansprüche

1. Anordnung zur Versorgung eines beweglichen Verbrauchers, insbesondere in einer Vertikalanwendung, wie bspw. einem Bohrturm oder dgl., umfassend
- eine Haupt-Energieführungkette (10) zum Führen mindestens einer Leitung zwischen einem ersten Anschlusspunkt (6), und einem dazu relativbeweglichen zweiten Anschlusspunkt (7), welcher zwischen einer ersten Endposition (4) und einer zweiten Endposition (5) entlang eines Verfahrwegs des Verbrauchers fährt, wobei ein erstes Ende der Energieführungskette am ersten Anschlusspunkt (6) und ein zweites Ende der Energieführungskette am zweiten Anschlusspunkt festliegt (7);
- einen verfahrbaren Schlitten (20), an welchem der erste Anschlusspunkt (6) und ein dritter Anschlusspunkt (8) vorgesehen sind, und welcher zwischen einer Betriebsstellung, die im mittleren Bereich zwischen der ersten und der zweiten Endposition liegt, und einer Parkstellung zwischen der Betriebsstellung und der zweiten Endposition verfahrbar ist; und
- eine Hilfs-Energieführungskette (14) zum Führen der mindestens einen Leitung zwischen dem dritten Anschlusspunkt (8) am verfahrbaren Schlitten und einem stationären vierten Anschlusspunkt (9)
**dadurch gekennzeichnet, dass**
dem Schlitten (20) eine eigene Längsführung (22) parallel zum Verfahrweg der Haupt-Energieführungskette (10) zugeordnet ist, welche sich über etwa ein Viertel bis etwa ein Drittel der Strecke vom mittleren Bereich, zwischen der ersten und der zweiten Endposition, hin zur zweiten Endposition erstreckt, und dass der Schlitten (20) eine Arretiervorrichtung (24, 25) umfasst, mit welcher dieser in der Betriebsstellung festgelegt wird.

2. Anordnung nach Anspruch 1, **dadurch gekennzeichnet, dass** die Baulänge der Hilfs-Energieführungskette (14) um mindestens ein Viertel, insbesondere die Hälfte, der Baulänge der als Haupt-Energieführungskette (10) verwendeten Energieführungskette kürzer ist.

3. Anordnung nach Anspruch 1 oder 2, **dadurch gekennzeichnet, dass** der Schlitten (20) mittels der Arretiervorrichtung (24, 25) in der Betriebsstellung und auch in der Parkstellung an der Längsführung (22) festgelegt wird.

4. Anordnung nach Anspruch 3, **dadurch gekennzeichnet, dass** die Längsführung (22) des Schlittens als Linearführung mittig zwischen zwei Führungsrinnen (16; 18) für die Haupt- und Hilfsenergieführungskette angeordnet ist, wobei die beiden Energieführungsketten (10; 14) vorzugsweise aus Kunststoff-Gliedern und Führungsrinnen vorzugsweise aus Leichtmetall, insbesondere Aluminium hergestellt sind.

5. Anordnung nach einem der Ansprüche 1 bis 4, **dadurch gekennzeichnet, dass** die Haupt- und die Hilfs-Energieführungskette (10; 14) jeweils Endbefestigungsglieder aufweisen, die den ersten (6) bzw. den dritten Anschlusspunkt (8) am Schlitten (20) bilden, und dass der Schlitten (20) jeweils zu jedem dieser Anschlusspunkte (6, 8) mindestens eine entsprechende Zugentlastung aufweist, um die geführte(n) Leitung(en) am Schlitten (20) gegen Zugkraft zu entlasten.

6. Anordnung nach einem der Ansprüche 1 bis 5, **dadurch gekennzeichnet, dass** mindestens drei in Längsrichtung zu einem Mast verbindbare Segmente (1, 2, 3) vorgesehen sind, dass die beiden Endpositionen jeweils an einem äußeren der verbundenen Segmente liegen, und dass die Parkstellung an dem äußeren Segment (3) mit der zweiten Endposition liegt, an welchem der vierte Anschlusspunkt (9) ortsfest ist, wobei die Anordnung vorzugsweise in einem Innenraum der Segmente (1, 2, 3) aufgenommen ist.

7. Anordnung nach einem der Ansprüche 1 bis 6, insbesondere nach Anspruch 3 und 5, wobei der Schlitten (20) beim Betrieb der Haupt-Energieführungskette (10) in der Betriebsstellung, insbesondere in einem mittleren (2) von drei verbundenen Segmenten, arretiert ist.

8. Anordnung nach einem der Ansprüche 1 bis 7, weiter umfassend ein Hebezeug, insbesondere eine Winde, zum Heben des Schlittens mitsamt den daran befestigten Energieführungsketten von der Parkstellung in die Betriebsstellung.

9. Anordnung nach einem der Ansprüche 1 bis 8, **dadurch gekennzeichnet, dass** der Schlitten (20) eine Längserstreckung über mindestens 50%, vorzugsweise mindestens 75% der Baulänge der Hilfs-Energieführungskette hat.

10. Anordnung nach Anspruch 9, **dadurch gekennzeichnet, dass** der Schlitten (20) beidseitig jeweils ein Profilblech (27A; 27B) zum Leiten der Haupt- bzw. der Hilfsenergieführungskette (10; 14) aufweist, die einen überwiegenden Anteil der Längserstreckung bilden, wobei die Profilbleche vorzugsweise durch ein Fachwerk (28) aus Metallstreben parallel gehalten sind.

11. Anordnung nach einem der Ansprüche 1 bis 10, insbesondere nach Anspruch 5 und/oder Anspruch 8, **dadurch gekennzeichnet, dass** am ersten Endbereich des Schlittens (20) der erste Anschlusspunkt (6) und der dritte Anschlusspunkt (8) gegenüberliegend vorgesehen sind und der Schlitten (20) dazwischen einen Umlenkbogen (23) für die geführte(n) Leitung(en) bildet.

12. Anordnung nach einem der Ansprüche 1 bis 11, **dadurch gekennzeichnet, dass** mehrere Leitungen, umfassend mindestens ein Stromversorgungskabel und eine Steuerleitung, vom vierten Anschlusspunkt (9), durch die Hilfs-Energieführungskette (14), über den Schlitten (20) und durch die Haupt-Energieführungskette (10) bis zum zweiten Anschlusspunkt (7) unterbrechungsfrei durchgehend geführt sind.

13. Bohrturm, insbesondere Tiefbohrturm, aus mehreren Segmenten (1, 2, 3), **gekennzeichnet durch** eine Anordnung nach einem der Ansprüche 1 bis 12, wobei die Haupt-Energieführungskette (10), der Schlitten (20) und die Hilfs-Energieführungskette (14) in eine Parkstellung innerhalb eines unteren Segments (3) eingefahren werden können, wobei dieses Segment (3) vorzugsweise eine geringfügig größere Baulänge hat als die anderen Segmente (1; 2).

14. Verwendung einer Anordnung nach einem der Ansprüche 1 bis 12 zur Versorgung des Kraftdrehkopfes in einem Bohrturm, mit Strom und mit Steuersignalen, wobei der Kraftdrehkopf über einen Vertikalhub von mindestens 30m verfahrbar ist.

## Claims

1. Assembly for supplying power to a mobile load, in particular in a vertical application, such as a drilling rig or the like, comprising
- a main energy chain (10) for guiding at least one cable between a first connection point (6) and a second connection point (7) that is movable relative thereto and travels along a travel path of the load, between a first end position (4) and a second end position (5), wherein a first end of the energy chain is fixed to the first connection point (6), and a second end of the energy chain is fixed to the second connection point (7);
- a displaceable carriage (20) on which the first connection point (6) and a third connection point (8) are provided and which is displaceable between an operating position which is located in the central region between the first and the second end position, and a parked position between the operating position and the second end position, and
- an auxiliary energy chain (14) for guiding the at least one cable between the third connection point (8) on the displaceable carriage and a stationary fourth connection point (9),
**characterized in that**
the carriage (20) is assigned its own longitudinal guide (22) in parallel with the displacement range of the main energy chain (10), which extends over approximately a quarter to approximately a third of the distance from the central region, between the first and the second end position, towards the second end position, and **in that** the carriage (20) comprises a locking device (24, 25) by means of which the carriage is fixed in the operating position.

2. Assembly according to claim 1, **characterized in that** the installation length of the auxiliary energy chain (14) is at least a quarter shorter than, in particular half the installation length of the energy chain used as the main energy chain (10).

3. Assembly according to either claim 1 or claim 2, **characterized in that** the carriage is fixed on the longitudinal guide (22) in the operating position and also in the parked position by means of the locking device (24, 25).

4. Assembly according to claim 3, **characterized in that** the longitudinal guide (22) of the carriage is arranged, as a linear guide, centrally between two guide channels (16; 18) for the main and auxiliary energy chain, wherein the two energy chains (10; 14) are preferably produced from plastics links and the guide channels are preferably produced from light metal, in particular aluminum.

5. Assembly according to any of claims 1 to 4, **characterized in that** the main and the auxiliary energy chain (10; 14) each comprise end fastening links which form the first (6) and the third connection point (8), respectively, on the carriage (20), and **in that** the carriage (20) in each case comprises at least one corresponding strain relief element for each of said connection points (6, 8) in order to relieve the tractive force on the guided cable(s) on the carriage (20).

6. Assembly according to any of claims 1 to 5, **characterized in that** at least three segments (1, 2, 3) are provided, which can be connected in the longitudinal direction to form a mast, **in that** the two end positions are in each case located on an outer one of the connected segments, and **in that** the parked position is located on the outer segment (3) with the second end position, on which segment the fourth connection point (9) is fixed in position, wherein the assembly is preferably received in an internal space of the segments (1, 2, 3).

7. Assembly according to any of claims 1 to 6, in particular according to claims 3 and 5, wherein the carriage (20) is locked in the operating position, in particular in a central (2) one of the three connected segments, during operation of the main energy chain (10) .

8. Assembly according to any of claims 1 to 7, further comprising lifting gear, in particular a hoist, for lifting the carriage, together with the energy chains fastened thereto, from the parked position into the operating position.

9. Assembly according to any of claims 1 to 8, **characterized in that** the carriage (20) has a longitudinal extension over at least 50%, preferably at least 75%, of the installation length of the auxiliary energy chain.

10. Assembly according to claim 9, **characterized in that** the carriage (20) in each case comprises a profiled plate (27A; 27B) on both sides, for guiding the main or the auxiliary energy chain (10; 14), which form a predominant portion of the longitudinal extension, wherein the profiled plates are preferably retained in parallel by means of a framework (28) made of metal struts.

11. Assembly according to any of claims 1 to 10, in particular according to claim 5 and/or claim 8, **characterized in that** the first connection point (6) and the third connection point (8) are provided opposite one another on the first end region of the carriage (20), and the carriage (20) forms a deflection arc (23) therebetween for the guided cable(s).

12. Assembly according to any of claims 1 to 11, **characterized in that** multiple cables, including at least one power supply cable and one control line, are guided in an interruption-free and continuous manner from the fourth connection point (9), through the auxiliary energy chain (14), via the carriage (20) and through the main energy chain (10), to the second connection point (7).

13. Drilling rig, in particular deep drilling rig, composed of multiple segments (1, 2, 3), **characterized by** an assembly according to any of claims 1 to 12, wherein the main energy chain (10), the carriage (20) and the auxiliary energy chain (14) can be retracted into a parked position, inside a bottom segment (3), wherein this segment (3) preferably has a slightly larger installation length than the other segments (1; 2) .

14. Use of an assembly according to any of claims 1 to 12 for supplying power and control signals to the top drive in a drilling rig, wherein the top drive is displaceable over a vertical stroke of at least 30 m.

## Revendications

1. Dispositif pour l'alimentation d'un consommateur mobile, en particulier dans une utilisation verticale, comme par exemple dans une tour de forage ou similaire, comportant
- une chaîne principale de transmission d'énergie (10) destinée à guider au moins une conduite entre un premier point de raccordement (6) et, mobile par rapport à lui, un deuxième point de raccordement (7), lequel se déplace entre une première position finale (4) et une deuxième position finale (5) le long d'un trajet du consommateur, une première extrémité de la chaîne de transmission d'énergie étant fixée au niveau du premier point de raccordement (6) et une deuxième extrémité de la chaîne de transmission d'énergie étant fixée au niveau du deuxième point de raccordement (7) ; -un chariot déplaçable (20), sur lequel sont prévus le premier point de raccordement (6) et un troisième point de raccordement (8), et qui est déplaçable entre une position de fonctionnement située dans la zone médiane entre la première et la deuxième position finale et une position de stationnement entre la position de fonctionnement et la deuxième position finale ; et
- une chaîne auxiliaire de transmission d'énergie (14) destinée à guider la au moins une conduite entre le troisième point de raccordement (8) sur le chariot mobile et un quatrième point de raccordement stationnaire (9),
**caractérisé en ce que**
est affecté au chariot (20) son propre guidage longitudinal (22) parallèle au trajet de la chaîne principale de transmission d'énergie (10), qui s'étend sur environ un quart jusqu'à environ un tiers de la distance depuis la zone médiane, entre la première et la deuxième position finale, jusqu'à la deuxième position finale, et que le chariot (20) comprend un dispositif d'arrêt (24, 25) par lequel il est fixé dans la position de fonctionnement.

2. Dispositif selon la revendication 1, **caractérisé en ce que** la longueur de la chaîne auxiliaire de transmission d'énergie (14) est plus courte d'au moins du quart, en particulier de la moitié, de la longueur de la chaîne de transmission d'énergie utilisée comme chaîne principale de transmission d'énergie (10).

3. Dispositif selon la revendication 1 ou 2, **caractérisé en ce que** le chariot (20) est fixé au moyen du dispositif d'arrêt (24, 25) sur le guidage longitudinal (22) dans la position de fonctionnement et également dans la position de stationnement.

4. Dispositif selon la revendication 3, **caractérisé en ce que** le guidage longitudinal (22) du chariot est disposé comme guidage linéaire au milieu entre deux rainures de guidage (16 ; 18) pour les chaînes de transmission d'énergie principale et auxiliaire, les deux chaînes de transmission d'énergie (10 ; 14) étant produites de préférence à partir de maillons en matière plastique et les rainures de guidage de préférence en métal léger, en particulier en aluminium.

5. Dispositif selon l'une des revendications 1 à 4, **caractérisé en ce que** les chaînes principale et auxiliaire de transmission d'énergie (10 ; 14) présentent chacune des éléments de fixation finals qui constituent le premier (6) respectivement le troisième point de raccordement (8) sur le chariot (20) et que le chariot (20) présente respectivement à chacun de ces points de raccordement (6, 8) au moins une décharge de traction correspondante destinée à soulager la(les) conduite(s) guidée(s) contre la force de traction.

6. Dispositif selon l'une des revendications 1 à 5, **caractérisé en ce que** sont prévus au moins trois segments (1, 2, 3) assemblables dans le sens longitudinal pour former un mât, que les deux positions finales se trouvent respectivement sur un segment d'extrémité des segments assemblés et que la position de stationnement se trouve sur le segment d'extrémité (3) portant la deuxième position finale, sur lequel le quatrième point de raccordement (9) est fixe, le dispositif étant logé de préférence dans un espace intérieur des segments (1, 2, 3).

7. Dispositif selon l'une des revendications 1 à 6, en particulier selon la revendication 3 et 5, le chariot (20) étant, lors du fonctionnement de la chaîne principale de transmission d'énergie (10), arrêté dans la position de fonctionnement, en particulier dans un segment médian (2) de trois segments assemblés.

8. Dispositif selon l'une des revendications 1 à 7, comportant en outre un équipement de levage, en particulier un treuil, destiné à lever le chariot, ainsi que les chaînes de transmission d'énergie qui y sont fixées, de la position de stationnement à la position de fonctionnement.

9. Dispositif selon l'une des revendications 1 à 8, **caractérisé en ce que** le chariot (20) a une extension longitudinale d'au moins 50 %, de préférence d'au moins 75 %, de la longueur de la chaîne auxiliaire de transmission d'énergie.

10. Dispositif selon la revendication 9, **caractérisé en ce que** le chariot (20) présente sur chacun de ses deux côtés une tôle profilée (27A ; 27B) destinée à conduire la chaîne principale ou auxiliaire de transmission d'énergie (10 ; 14), tôles profilées qui constituent la majorité de l'extension longitudinale, les tôles profilées étant maintenues parallèles de préférence par un treillis (20) composé d'entretoises métalliques.

11. Dispositif selon l'une des revendications 1 à 10, en particulier selon la revendication 5 et/ou la revendication 8, **caractérisé en ce que** le premier point de raccordement (6) et le troisième point de raccordement (8) sont prévus opposés l'un à l'autre au niveau de la première zone finale du chariot (20) et que le chariot (20) forme entre eux un coude de renvoi (23) pour la (les) conduite(s) guidée(s).

12. Dispositif selon l'une des revendications 1 à 11, **caractérisé en ce que** plusieurs conduites, comprenant au moins un câble d'alimentation en électricité et une conduite de commande, sont guidés de manière continue et sans interruption, du quatrième point de raccordement, à travers la chaîne auxiliaire de transmission d'énergie (14), via le chariot (20) et à travers la chaîne principale de transmission d'énergie (10), jusqu'au deuxième point de raccordement (7).

13. Tour de forage, en particulier tour de forage profond, en plusieurs segments (1, 2, 3), **caractérisée par** un dispositif selon l'une des revendications 1 à 12, la chaîne principale de transmission d'énergie (10), le chariot (20) et la chaîne auxiliaire de transmission d'énergie (14) pouvant être déplacés vers une position de stationnement au sein d'un segment inférieur (3), ce segment (3) ayant de préférence une longueur légèrement supérieure aux autres segments (1 ; 2).

14. Utilisation d'un dispositif selon l'une des revendications 1 à 12 en vue de l'alimentation de la tête d'entraînement dans une tour de forage, la tête d'entraînement étant déplaçable sur une course verticale d'au moins 30 m.
